# EUROPEAN PATENT APPLICATION

(11) **EP 4 744 909 A2**
(43) Date of publication of application: **20.05.2026**
(21) Application number: 26169723.9
(22) Date of filing: 24.01.2022
(51) Int. Cl.: B60B 33/04

(54) **WHEEL MECHANISM**

(30) Priority: 25.01.2021 CN 202110099978
(62) Divisional of application: 22701384.4
(71) Applicant: Wonderland Switzerland AG, 6312 Steinhausen (CH)
(72) Inventor: WANG, Er-xue, Dongguan, Guangdong, 523648 (CN); GUO, Zhengwen, Dongguan, Guangdong, 523648 (CN); DUAN, Xiaosong, Dongguan, Guangdong, 523648 (CN)
(74) Representative: Flentje, Hanno Alexander Peter

(57) **Abstract**

A wheel mechanism (1', 1", 3) comprising a fixing base (10, 30), a wheel base (12, 32), a wheel (14, 34) pivotally connected to the wheel base (12, 32), a fixing tube (16, 36) pivotally connecting the wheel base (12, 32) to the fixing base (10, 30), and a lower gasket (20, 40) disposed between the wheel base (12, 32) and the fixing tube (16, 36).

## Description

### Field of the Invention

The present invention relates to a wheel mechanism, particularly a wheel mechanism capable of preventing a wheel from shimmying.

### Background of the Invention

A stroller is a tool used by parents to carry babies or children when they go shopping. At present, when the stroller is moving, wheels will move up and down to generate shimmy. At this time, the wheels may not rotate stably due to shimmy. Furthermore, the upper and lower components will collide with each other due to shimmy, thereby generating noise and reducing the comfort of the stroller.

### Summary of the Invention

The present invention aims at providing a wheel mechanism capable of preventing a wheel from shimmying, thereby resolving the aforesaid problems.

This is achieved by a wheel mechanism according to claim 1. The dependent claims pertain to corresponding further developments and improvements.

As will be seen more clearly from the detailed description following below, a non-claimed wheel mechanism includes a fixing base, a wheel base, a wheel, a fixing tube and an upper gasket. The wheel is pivotally connected to the wheel base. The fixing tube pivotally connects the wheel base to the fixing base. The upper gasket is disposed between the fixing base and the wheel base.

Preferably, the upper gasket is sleeved on the fixing tube.

Preferably, the wheel mechanism further includes a lower gasket disposed between the wheel base and the fixing tube.

Preferably, the lower gasket is disposed on a lower edge of the fixing tube.

Preferably, the fixing base has a fixing hole, the wheel base has a through hole, and an end of the fixing tube passes through the through hole and is fixed in the fixing hole, such that the fixing tube pivotally connects the wheel base to the fixing base.

As will be seen more clearly from the detailed description following below, the claimed wheel mechanism includes a fixing base, a wheel base, a wheel, a fixing tube and a lower gasket. The wheel is pivotally connected to the wheel base. The fixing tube pivotally connects the wheel base to the fixing base. The lower gasket is disposed between the wheel base and the fixing tube.

Preferably, the lower gasket is disposed on a lower edge of the fixing tube.

Preferably, the wheel mechanism further includes an upper gasket disposed between the fixing base and the wheel base.

Preferably, the upper gasket is sleeved on the fixing tube.

Preferably, the fixing base has a fixing hole, the wheel base has a through hole, and an end of the fixing tube passes through the through hole and is fixed in the fixing hole, such that the fixing tube pivotally connects the wheel base to the fixing base.

Preferably, the fixing tube is fixed in the fixing base, the fixing tube has a through hole, the wheel base has a rotating shaft, and the rotating shaft is rotatably disposed in the through hole, such that the fixing tube pivotally connects the wheel base to the fixing base.

Preferably, a top of the rotating shaft abuts against the fixing tube.

Preferably, the wheel base has a directional plate fixed on the rotating shaft and the lower gasket is disposed on the directional plate.

Preferably, the rotating shaft has a step configured to be welded and positioned with the directional plate.

Preferably, the lower gasket abuts against the directional plate and a lower edge of the fixing tube.

Preferably, the lower gasket is made of ethylene-vinyl acetate copolymer (EVA) or rubber.

Preferably, the lower gasket is interference fit with the rotating shaft.

Preferably, the lower gasket is interference fit with a lower edge of the fixing tube.

Preferable, a periphery of the lower gasket comprises lubricant.

Preferably, a restraining pin is inserted into the fixing base and the fixing tube from a side of the fixing base and abuts against a restraining recess of the rotating shaft such that the rotating shaft is rotatably restrained in the through hole of the fixing tube.

As will be seen more clearly from the detailed description following below, a non-claimed wheel mechanism includes a fixing base, a wheel base, a wheel, a rotating shaft and at least one resilient member. The wheel is pivotally connected to the wheel base. The rotating shaft is disposed on one of the fixing base and the wheel base. The wheel base is pivotally connected to the fixing base by the rotating shaft. The at least one resilient member is disposed between at least two of the fixing base, the wheel base and the rotating shaft.

Preferably, the at least one resilient member is disposed between the fixing base and the wheel base and around the rotating shaft.

Preferably, the at least one resilient member is ring-shaped and sleeved on the rotating shaft.

Preferably, the at least one resilient member has at least one protruding portion and the at least one protruding portion abuts against one of the fixing base and the wheel base.

Preferably, the fixing base has a through hole, the at least one resilient member is disposed in the through hole, the rotating shaft is disposed on the wheel base, and the rotating shaft is rotatably disposed in the through hole, such that the at least one resilient member is disposed between the fixing base and the rotating shaft.

Preferably, the wheel base has a through hole, the at least one resilient member is disposed in the through hole, the rotating shaft is disposed on the fixing base, and the rotating shaft is rotatably disposed in the through hole, such that the at least one resilient member is disposed between the wheel base and the rotating shaft.

### Brief Description of the Drawings

In the following, the invention is further illustrated by way of example, taking reference to the accompanying drawings thereof:
FIG. 1 is a perspective view illustrating a wheel mechanism according to an embodiment of the invention,
FIG. 2 is an exploded view illustrating the wheel mechanism shown in FIG. 1,
FIG. 3 is a sectional view illustrating the wheel mechanism shown in FIG. 1,
FIG. 4 is a sectional view illustrating a wheel mechanism according to another embodiment of the invention,
FIG. 5 is a sectional view illustrating a wheel mechanism according to another embodiment of the invention,
FIG. 6 is a perspective view illustrating a wheel mechanism according to another embodiment of the invention,
FIG. 7 is an exploded view illustrating the wheel mechanism shown in FIG. 6,
FIG. 8 is a perspective view illustrating a rotating shaft shown in FIG. 7,
FIG. 9 is a partial sectional view illustrating the wheel mechanism shown in FIG. 6,
FIG. 10 is a perspective view illustrating a wheel mechanism according to another embodiment of the invention,
FIG. 11 is a perspective view illustrating a wheel base shown in FIG. 10,
FIG. 12 is a sectional view illustrating a wheel mechanism according to another embodiment of the invention,
FIG. 13 is a perspective view illustrating a fixing base shown in FIG. 12,
FIG. 14 is a perspective view illustrating a resilient member shown in FIG. 13,
FIG. 15 is a sectional view illustrating a wheel mechanism according to another embodiment of the invention, and
FIG. 16 is a sectional view illustrating a wheel mechanism according to another embodiment of the invention.

### Detailed Description

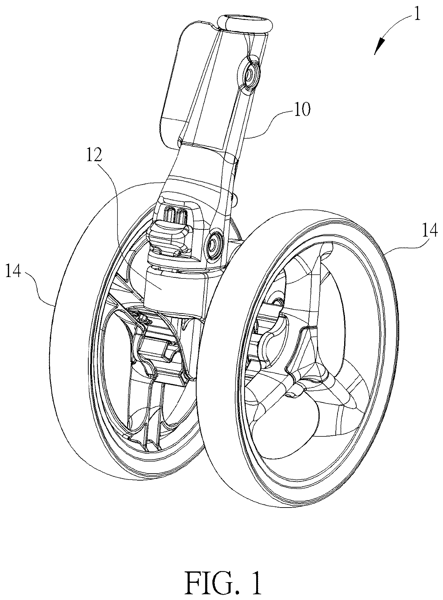

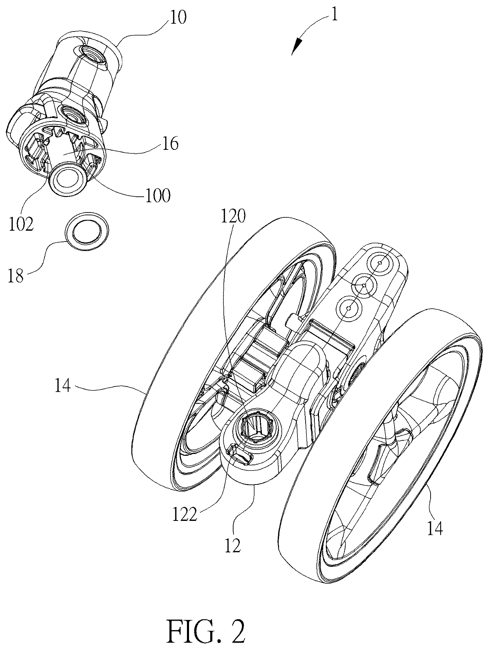

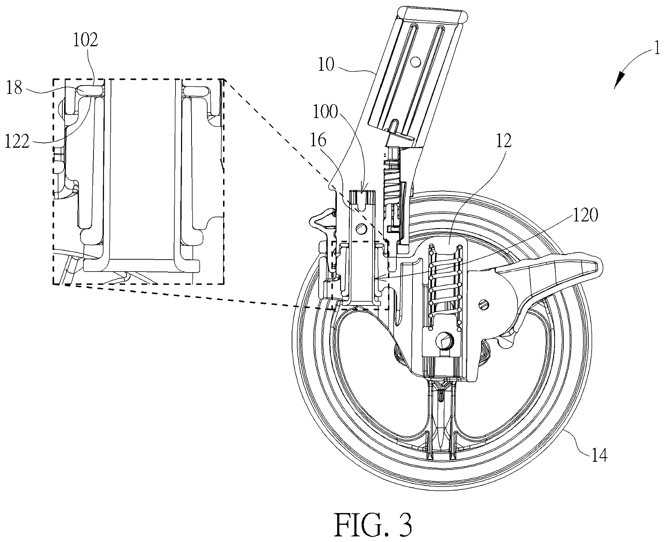

Referring to FIGs. 1 to 3, FIG. 1 is a perspective view illustrating a wheel mechanism 1 according to an embodiment of the invention, FIG. 2 is an exploded view illustrating the wheel mechanism 1 shown in FIG. 1, and FIG. 3 is a sectional view illustrating the wheel mechanism 1 shown in FIG. 1.

As shown in FIGs. 1 to 3, the wheel mechanism 1 of the invention includes a fixing base 10, a wheel base 12, a wheel 14, a fixing tube 16 and an upper gasket 18. The wheel 14 is pivotally connected to the wheel base 12, such that the wheel 14 can rotate. In this embodiment, there are two wheels 14 pivotally connected to opposite sides of the wheel base 12. The fixing tube 16 pivotally connects the wheel base 12 to the fixing base 10. In this embodiment, the fixing base 10 has a fixing hole 100 and the wheel base 12 has a through hole 120. An end of the fixing tube 16 passes through the through hole 120 of the wheel base 12 and is fixed in the fixing hole 100 of the fixing base 10, such that the fixing tube 16 pivotally connects the wheel base 12 to the fixing base 10. Accordingly, the wheel base 12 with the wheel 14 can rotate around the fixing base 10.

As shown in FIG. 3, in this embodiment, the upper gasket 18 may be sleeved on the fixing tube 16, wherein the upper gasket 18 may be sleeved on any position between opposite ends of the fixing tube 16, e.g. a middle segment of the fixing tube 16 or a position 1/3 away from either end of the fixing tube 16. Thus, after the wheel mechanism 1 is assembled, the upper gasket 18 is disposed between the fixing base 10 and the wheel base 12. The upper gasket 18 abuts against an inner surface 102 of the fixing base 10 and a top surface 122 of the wheel base 12 to prevent the wheel 14 with the wheel base 12 from moving up and down, so as to prevent the wheel 14 from shimmying. Furthermore, since the upper gasket 18 is disposed between the fixing base 10 and the wheel base 12, it can further prevent the inner surface 102 of the fixing base 10 and the top surface 122 of the wheel base 12 from colliding with each other to generate noise. In this embodiment, the upper gasket 18 may be made of ethylene-vinyl acetate copolymer (EVA), rubber or other resilient materials according to practical applications.

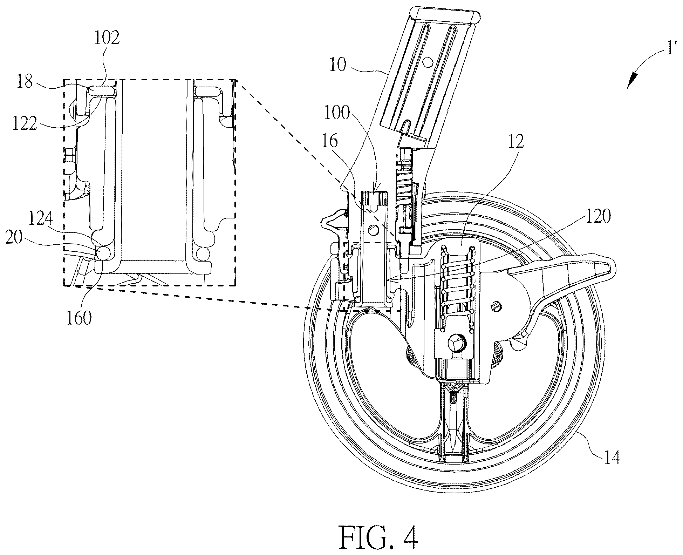

Referring to FIG. 4, FIG. 4 is a sectional view illustrating a wheel mechanism 1' according to another embodiment of the invention. The main difference between the wheel mechanism 1' and the aforesaid wheel mechanism 1 is that the wheel mechanism 1' further includes a lower gasket 20 disposed between the wheel base 12 and the fixing tube 16, as shown in FIG. 4. In this embodiment, the lower gasket 20 is disposed on a lower edge 160 of the fixing tube 16. Thus, after the wheel mechanism 1' is assembled, the lower gasket 20 abuts against a bottom surface 124 of the wheel base 12 and the lower edge 160 of the fixing tube 16 to prevent the wheel 14 with the wheel base 12 from moving up and down, so as to prevent the wheel 14 from shimmying. Furthermore, since the lower gasket 20 is disposed between the wheel base 12 and the fixing tube 16, it can further prevent the bottom surface 124 of the wheel base 12 and the lower edge 160 of the fixing tube 16 from colliding with each other to generate noise. In this embodiment, the lower gasket 20 may be made of ethylene-vinyl acetate copolymer (EVA), rubber or other resilient materials according to practical applications.

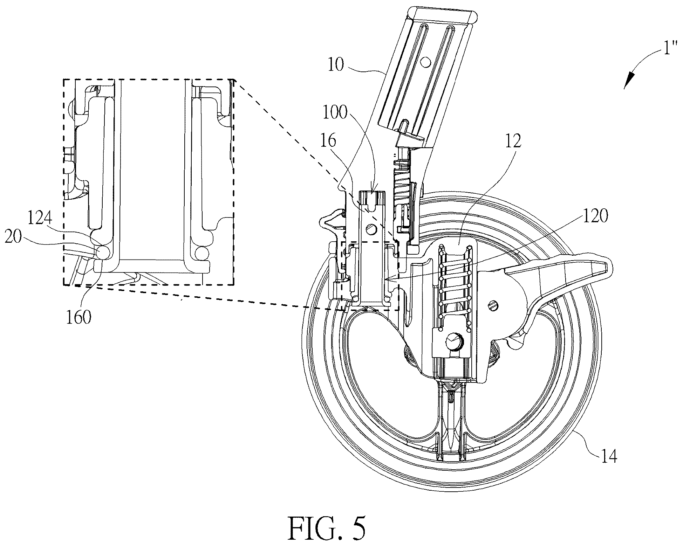

Referring to FIG. 5, FIG. 5 is a sectional view illustrating a wheel mechanism 1" according to another embodiment of the invention. The main difference between the wheel mechanism 1" and the aforesaid wheel mechanism 1' is that the wheel mechanism 1" only includes the lower gasket 20 without the upper gasket 18. In other words, the invention may only dispose the lower gasket 20 between the wheel base 12 and the fixing tube 16 without disposing the upper gasket 18.

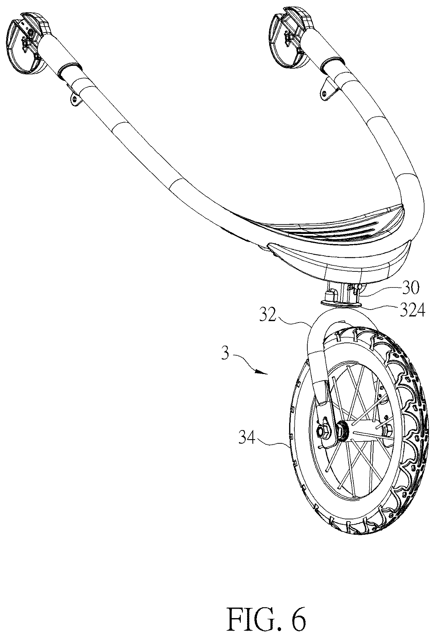

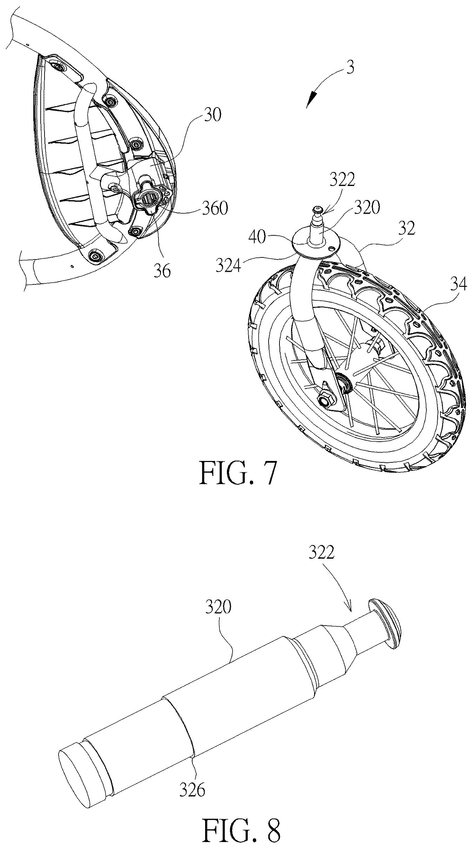

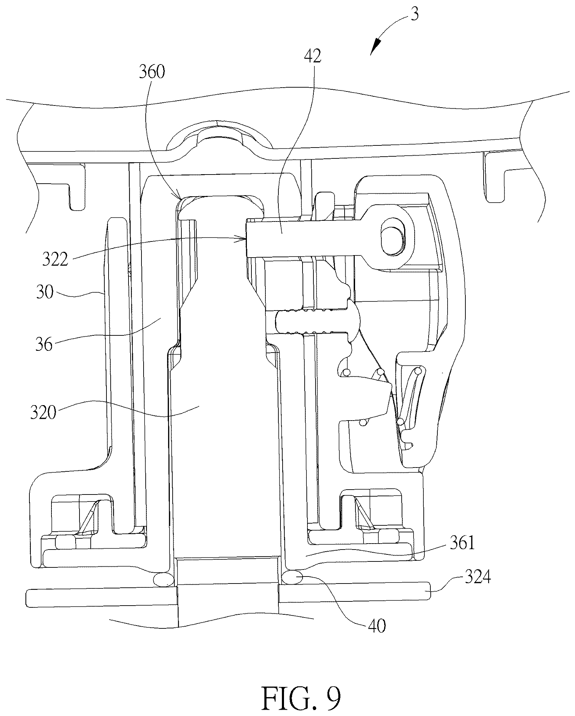

Referring to FIGs. 6 to 9, FIG. 6 is a perspective view illustrating a wheel mechanism 3 according to another embodiment of the invention, FIG. 7 is an exploded view illustrating the wheel mechanism 3 shown in FIG. 6, FIG. 8 is a perspective view illustrating a rotating shaft 320 shown in FIG. 7, and FIG. 9 is a partial sectional view illustrating the wheel mechanism 3 shown in FIG. 6.

As shown in FIGs. 6 to 9, the wheel mechanism 3 of the invention includes a fixing base 30, a wheel base 32, a wheel 34, a fixing tube 36 and a lower gasket 40. The wheel 34 is pivotally connected to the wheel base 32, such that the wheel 34 can rotate. The fixing tube 36 pivotally connects the wheel base 32 to the fixing base 30. In this embodiment, the fixing tube 36 is fixed in the fixing base 30. Furthermore, the fixing tube 36 has a through hole 360 and the wheel base 32 has a rotating shaft 320. The rotating shaft 320 is rotatably disposed in the through hole 360, such that the fixing tube 36 pivotally connects the wheel base 32 to the fixing base 30. As shown in FIG. 9, a restraining pin 42 may be inserted into the fixing base 30 and the fixing tube 36 from a side of the fixing base 30 and abuts against a restraining recess 322 of the rotating shaft 320, such that the rotating shaft 320 is rotatably restrained in the through hole 360 of the fixing tube 36. Accordingly, the wheel base 32 with the wheel 34 can rotate around the fixing base 30.

As shown in FIG. 9, the lower gasket 40 is disposed between the wheel base 32 and the fixing tube 36. As shown in FIGs. 7 and 9, the wheel base 32 may have a directional plate 324 fixed on the rotating shaft 320. As shown in FIG. 8, the rotating shaft 320 may have a step 326. The step 326 is used to be welded and positioned with the directional plate 324, so as to determine the length of the rotating shaft 320 exposed out of the directional plate 324. The lower gasket 40 may be disposed on the directional plate 324. Thus, after the wheel mechanism 3 is assembled, the lower gasket 40 abuts against the directional plate 324 of the wheel base 32 and a lower edge 361 of the fixing tube 36 to prevent the wheel 34 with the wheel base 32 from moving up and down, so as to prevent the wheel 34 from shimmying. Furthermore, since the lower gasket 40 is disposed between the wheel base 32 and the fixing tube 36, it can further prevent the directional plate 324 of the wheel base 32 and the fixing tube 36 from colliding with each other to generate noise. In this embodiment, the lower gasket 40 may be made of ethylene-vinyl acetate copolymer (EVA), rubber or other resilient materials according to practical applications. Preferably, a top of the rotating shaft 320 may abut against the fixing tube 36 to prevent the lower gasket 40 from being crushed. Furthermore, the lower gasket 40 may be interference fit with the rotating shaft 320 to prevent dust from entering. Still further, the lower gasket 40 may also be interference fit with the lower edge 361 of the fixing tube 36. Moreover, lubricant may be added to the periphery of the lower gasket 40, such that noise will not be generated while the lower gasket 40 and the fixing tube 36 are impacted.

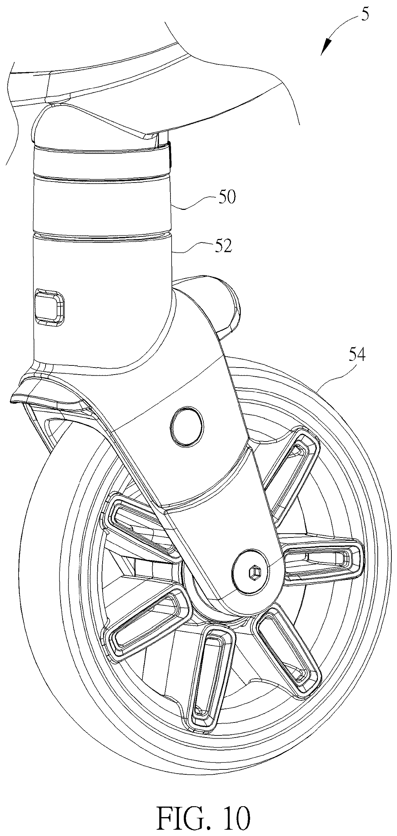

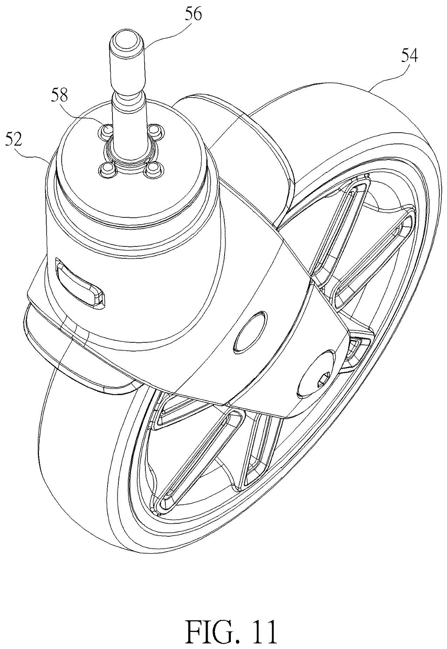

Referring to FIGs. 10 and 11, FIG. 10 is a perspective view illustrating a wheel mechanism 5 according to another embodiment of the invention and FIG. 11 is a perspective view illustrating a wheel base 52 shown in FIG. 10.

As shown in FIGs. 10 and 11, the wheel mechanism 5 includes a fixing base 50, a wheel base 52, a wheel 54, a rotating shaft 56 and at least one resilient member 58. The wheel 54 is pivotally connected to the wheel base 52, such that the wheel 54 can rotate. The rotating shaft 56 is disposed on the wheel base 52, such that the wheel base 52 may be pivotally connected to the fixing base 50 by the rotating shaft 56. Accordingly, the wheel base 52 with the wheel 54 can rotate around the fixing base 50. In this embodiment, the wheel mechanism 5 may include four resilient members 58. The four resilient members 58 may be disposed on the wheel base 52 and around the rotating shaft 56. It should be noted that the number and position of the resilient members 58may be determined according to practical applications, so the invention is not limited to the embodiment shown in the figure. In this embodiment, the resilient member 58 is circular, but the invention is not so limited. In another embodiment, the resilient member 58 may also be rectangular, oval-shaped or other shapes according to practical applications. After the wheel mechanism 5 is assembled, the resilient members 58 are disposed between the fixing base 50 and the wheel base 52 to prevent the wheel 54 with the wheel base 52 from moving up and down, so as to prevent the wheel 54 from shimmying. Furthermore, since the resilient members 58 are disposed between the fixing base 50 and the wheel base 52, it can further prevent the wheel base 52 and the fixing base 50 from colliding with each other to generate noise. In this embodiment, the resilient member 58 may be made of ethylene-vinyl acetate copolymer (EVA), rubber or other resilient materials according to practical applications.

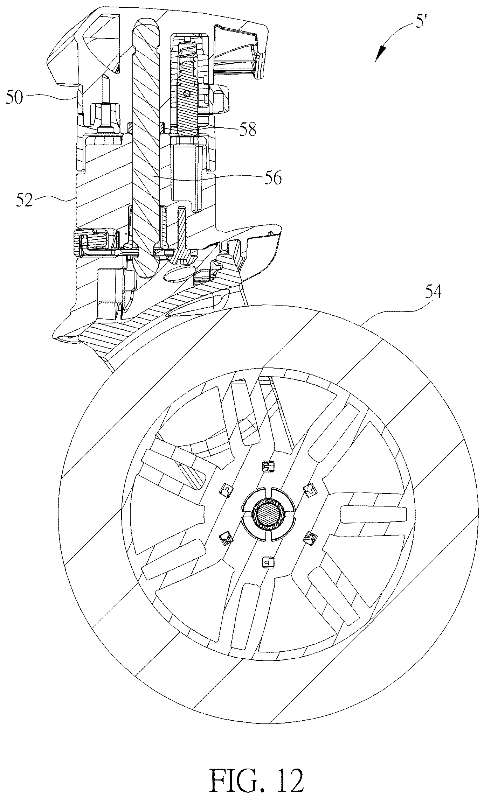

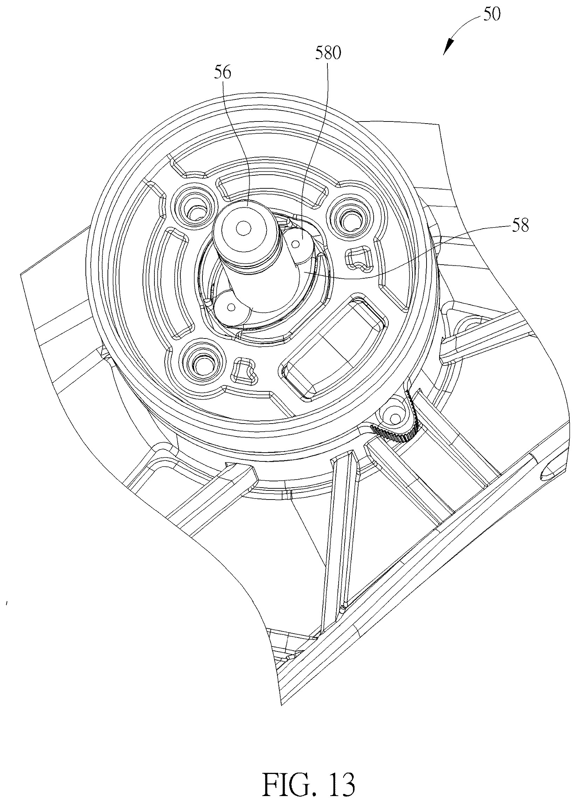

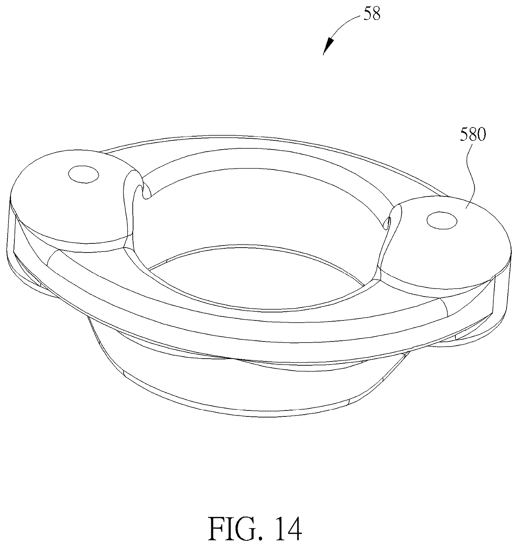

Referring to FIGs. 12 to 14, FIG. 12 is a sectional view illustrating a wheel mechanism 5' according to another embodiment of the invention, FIG. 13 is a perspective view illustrating a fixing base 50 shown in FIG. 12, and FIG. 14 is a perspective view illustrating a resilient member 58 shown in FIG. 13. The main difference between the wheel mechanism 5' and the aforesaid wheel mechanism 5 is that the rotating shaft 56 of the wheel mechanism 5' is disposed on the fixing base 50 and the resilient member 58 of the wheel mechanism 5' is ring-shaped, as shown in FIGs. 12 to 14. In this embodiment, the resilient member 58 may be sleeved on the rotating shaft 56 and abuts against the fixing base 50. The resilient member 58 may be interference fit with the rotating shaft 56 to prevent the resilient member 58 from coming off the rotating shaft 56 as the wheel base 52 is detached from the fixing base 50. The shape of the resilient member 58 may be oval-shaped, circular, rectangular or other shapes according to practical applications. In another embodiment, the resilient member 58 shown in FIG. 13 may also be replaced by the four resilient members 58 shown in FIG. 11 according to practical applications. As shown in FIG. 12, after the wheel mechanism 5' is assembled, the resilient member is disposed between the fixing base 50 and the wheel base 52 to prevent the wheel 54 with the wheel base 52 from moving up and down, so as to prevent the wheel 54 from shimmying. Furthermore, since the resilient member 58 is disposed between the fixing base 50 and the wheel base 52, it can further prevent the wheel base 52 and the fixing base 50 from colliding with each other to generate noise. The resilient member 58 may be interference fit with a contact surface of the wheel base 52 to ensure that the resilient member 58 is in tight contact with the wheel base 52.

As shown in FIG. 14, the resilient member 58 may have at least one protruding portion 580. In this embodiment, the resilient member 58 may have two protruding portions 580. It should be noted that the number and position of the protruding portions 580 may be determined according to practical applications, so the invention is not limited to the embodiment shown in the figure. After the wheel mechanism 5' is assembled, the protruding portions 580 abut against the wheel base 52. In other words, the resilient member 58 may be in contact with the wheel base 52 partially by the protruding portions 580. In another embodiment, the resilient member 58 may not have the protruding portions 580. At this time, the resilient member 58 is in surface contact with the wheel base 52. In another embodiment, the resilient member 58 may also be in contact with the fixing base 50 partially by the protruding portions 580.

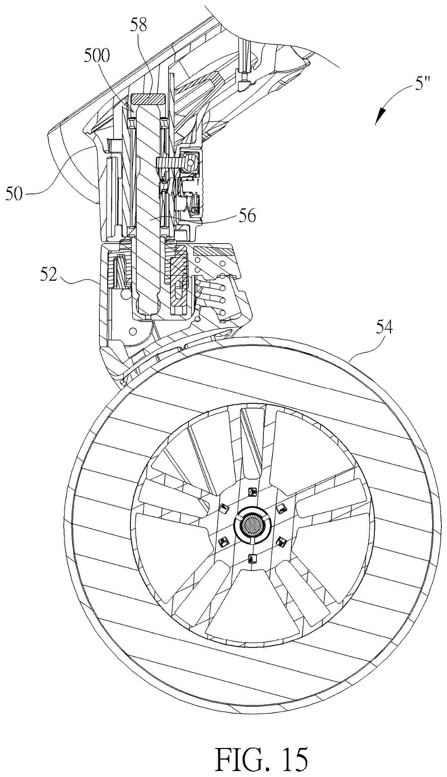

Referring to FIG. 15, FIG. 15 is a sectional view illustrating a wheel mechanism 5" according to another embodiment of the invention. As shown in FIG. 15, the fixing base 50 has a through hole 500 and the rotating shaft 56 is disposed on the wheel base 52. The main difference between the wheel mechanism 5" and the aforesaid wheel mechanism 5 is that the resilient member 58 of the wheel mechanism 5" is disposed in the through hole 500 of the fixing base 50. Then, the rotating shaft 56 is rotatably disposed in the through hole 500 of the fixing base 50, such that the resilient member 58 is disposed between the fixing base 50 and the rotating shaft 56 to prevent the wheel 54 with the wheel base 52 from moving up and down, so as to prevent the wheel 54 from shimmying. Furthermore, since the resilient member 58 is disposed between the fixing base 50 and the rotating shaft 56, it can further prevent the rotating shaft 56 and the fixing base 50 from colliding with each other to generate noise. The resilient member 58 may be interference fit with a contact surface of the rotating shaft 56 to ensure that the resilient member 58 is in tight contact with the rotating shaft 56. In another embodiment, the resilient member 58 may also be embedded in an end of the rotating shaft 56.

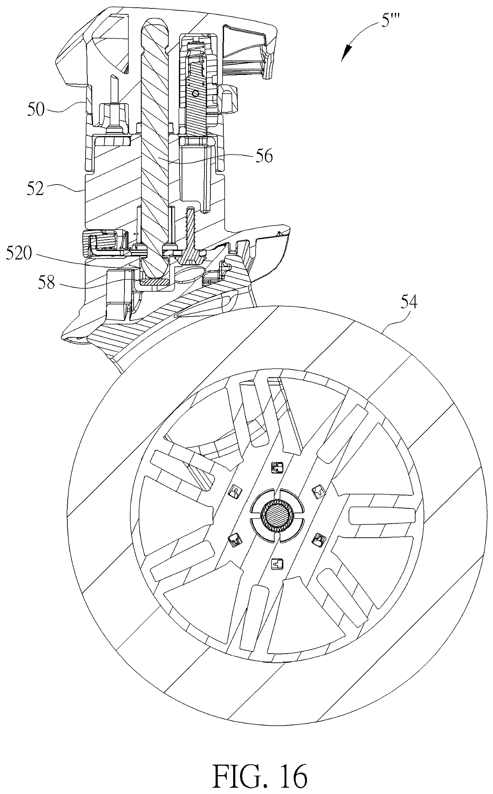

Referring to FIG. 16, FIG. 16 is a sectional view illustrating a wheel mechanism 5‴ according to another embodiment of the invention. As shown in FIG. 16, the wheel base 52 has a through hole 520 and the rotating shaft 56 is disposed on the fixing base 50. The main difference between the wheel mechanism 5‴ and the aforesaid wheel mechanism 5 is that the resilient member 58 of the wheel mechanism 5‴ is disposed in the through hole 520 of the wheel base 52. Then, the rotating shaft 56 is rotatably disposed in the through hole 520 of the wheel base 52, such that the resilient member 58 is disposed between the wheel base 52 and the rotating shaft 56 to prevent the wheel 54 with the wheel base 52 from moving up and down, so as to prevent the wheel 54 from shimmying. Furthermore, since the resilient member 58 is disposed between the wheel base 52 and the rotating shaft 56, it can further prevent the rotating shaft 56 and the wheel base 52 from colliding with each other to generate noise. The resilient member 58 may be interference fit with a contact surface of the rotating shaft 56 to ensure that the resilient member 58 is in tight contact with the rotating shaft 56. In another embodiment, the resilient member 58 may also be embedded in an end of the rotating shaft 56.

As mentioned in the above, the invention disposes the gasket around the fixing tube to prevent the wheel with the wheel base from moving up and down, so as to prevent the wheel from shimmying. In an embodiment, the upper gasket may be disposed between the fixing base and the wheel base to prevent the fixing base and the wheel base from colliding with each other to generate noise. In another embodiment, the lower gasket may be disposed between the wheel base and the fixing tube to prevent the wheel base and the fixing tube from colliding with each other to generate noise. Needless to say, the invention may also dispose the upper gasket and the lower gasket around the fixing tube at the same time to improve the effect of preventing the wheel from shimmying. Furthermore, in another embodiment, when the wheel base is pivotally connected to the fixing base by the rotating shaft, the invention may selectively dispose at least one resilient member between at least two of the fixing base, the wheel base and the rotating shaft to prevent the wheel from shimmying.

The foregoing are only preferred embodiments of the invention while the protection scope thereof is not limited to the above description. Any change or substitution within the technical scope disclosed by the invention should be covered by the protection scope of the invention.

Embodiments of the invention also include the following aspects.
1. A wheel mechanism characterized by the wheel mechanism comprising:
   a fixing base;
   a wheel base;
   a wheel pivotally connected to the wheel base;
   a fixing tube pivotally connecting the wheel base to the fixing base; and
   an upper gasket disposed between the fixing base and the wheel base.
2. The wheel mechanism of aspect 1 further characterized in that the upper gasket is sleeved on the fixing tube.
3. The wheel mechanism of any one of aspects 1 or 2 further characterized in that the wheel mechanism further comprises a lower gasket disposed between the wheel base and the fixing tube.
4. The wheel mechanism of aspect 3 further characterized in that the lower gasket is disposed on a lower edge of the fixing tube.
5. The wheel mechanism of any one of aspects 1 to 4 further characterized in that the fixing base has a fixing hole, the wheel base has a through hole, and an end of the fixing tube passes through the through hole and is fixed in the fixing hole, such that the fixing tube pivotally connects the wheel base to the fixing base.
6. A wheel mechanism characterized by the wheel mechanism comprising:
   a fixing base;
   a wheel base;
   a wheel pivotally connected to the wheel base ;
   a fixing tube pivotally connecting the wheel base to the fixing base; and
   a lower gasket disposed between the wheel base and the fixing tube.
7. The wheel mechanism of aspect 6 further characterized in that the lower gasket is disposed on a lower edge of the fixing tube.
8. The wheel mechanism of any one of aspects 6 or 7 further characterized in that the wheel mechanism further comprises an upper gasket disposed between the fixing base and the wheel base.
9. The wheel mechanism of aspect 8 further characterized in that the upper gasket is sleeved on the fixing tube.
10. The wheel mechanism of any one of aspects 6 to 9 further characterized in that the fixing base has a fixing hole, the wheel base has a through hole, and an end of the fixing tube passes through the through hole and is fixed in the fixing hole, such that the fixing tube pivotally connects the wheel base to the fixing base.
11. The wheel mechanism of any one of aspects 6 to 10 further characterized in that the fixing tube is fixed in the fixing base, the fixing tube has a through hole, the wheel base has a rotating shaft, and the rotating shaft is rotatably disposed in the through hole, such that the fixing tube pivotally connects the wheel base to the fixing base.
12. The wheel mechanism of aspect 11 further characterized in that a top of the rotating shaft abuts against the fixing tube.
13. The wheel mechanism of any one of aspects 11 or 12 further characterized in that the wheel base has a directional plate fixed on the rotating shaft and the lower gasket is disposed on the directional plate.
14. A wheel mechanism characterized by the wheel mechanism comprising:
   a fixing base;
   a wheel base;
   a wheel pivotally connected to the wheel base;
   a rotating shaft disposed on one of the fixing base and the wheel base, the wheel base being pivotally connected to the fixing base by the rotating shaft; and
   at least one resilient member disposed between at least two of the fixing base, the wheel base and the rotating shaft.
15. The wheel mechanism of aspect 14 further characterized in that the at least one resilient member is disposed between the fixing base and the wheel base and around the rotating shaft.
16. The wheel mechanism of any one of aspects 14 or 15 further characterized in that the at least one resilient member is ring-shaped and sleeved on the rotating shaft.
17. The wheel mechanism of aspect 16 further characterized in that the at least one resilient member has at least one protruding portion and the at least one protruding portion abuts against one of the fixing base and the wheel base.
18. The wheel mechanism of any one of aspects 14 to 17 further characterized in that the fixing base has a through hole, the at least one resilient member is disposed in the through hole, the rotating shaft is disposed on the wheel base, and the rotating shaft is rotatably disposed in the through hole, such that the at least one resilient member is disposed between the fixing base and the rotating shaft.
19. The wheel mechanism of any one of aspects 14 to 18 further characterized in that the wheel base has a through hole, the at least one resilient member is disposed in the through hole, the rotating shaft is disposed on the fixing base and the rotating shaft is rotatably disposed in the through hole, such that the at least one resilient member is disposed between the wheel base and the rotating shaft.

## Claims

1. A wheel mechanism (1', 1", 3) **characterized by** the wheel mechanism (1', 1", 3) comprising:
a fixing base (10, 30);
a wheel base (12, 32);
a wheel (14, 34) pivotally connected to the wheel base (12, 32);
a fixing tube (16, 36) pivotally connecting the wheel base (12, 32) to the fixing base (10, 30); and
a lower gasket (20, 40) disposed between the wheel base (12, 32) and the fixing tube (16, 36).

2. The wheel mechanism (1', 1", 3) of claim 1, further **characterized in that** the lower gasket (20, 40) is disposed on a lower edge (160, 361) of the fixing tube (16, 36).

3. The wheel mechanism (1') of any one of the preceding claims, further **characterized in that** the wheel mechanism (1') further comprises an upper gasket (18) disposed between the fixing base (10) and the wheel base (12).

4. The wheel mechanism (1') of claim 3, wherein the upper gasket (18) is sleeved on the fixing tube (16).

5. The wheel mechanism (1', 1") of any one of the preceding claims, further **characterized in that** the fixing base (10) has a fixing hole (100), the wheel base (12) has a through hole (120), and an end of the fixing tube (16) passes through the through hole (120) and is fixed in the fixing hole (100), such that the fixing tube (16) pivotally connects the wheel base (12) to the fixing base (10).

6. The wheel mechanism (3) of claim 1, further **characterized in that** the fixing tube (36) is fixed in the fixing base (30), the fixing tube (36) has a through hole (360), the wheel base (32) has a rotating shaft (320), and the rotating shaft (320) is rotatably disposed in the through hole (360), such that the fixing tube (36) pivotally connects the wheel base (32) to the fixing base (30).

7. The wheel mechanism (3) of claim 6 wherein a top of the rotating shaft (320) abuts against the fixing tube (36).

8. The wheel mechanism (3) of claim 6 or 7, further **characterized in that** the wheel base (32) has a directional plate (324) fixed on the rotating shaft (320) and the lower gasket (40) is disposed on the directional plate (324).

9. The wheel mechanism (3) of claim 8, wherein the rotating shaft (320) has a step (326) configured to be welded and positioned with the directional plate (324).

10. The wheel mechanism (3) of claim 8 or 9, wherein the lower gasket (40) abuts against the directional plate (324) and a lower edge (361) of the fixing tube (36).

11. The wheel mechanism (3) of any one of the preceding claims, wherein the lower gasket (40) is made of ethylene-vinyl acetate copolymer or rubber.

12. The wheel mechanism (3) of any one of claims 6 to 11, wherein the lower gasket (40) is interference fit with the rotating shaft (320).

13. The wheel mechanism (3) of any one of the preceding claims, wherein the lower gasket (40) is interference fit with a lower edge (361) of the fixing tube (36).

14. The wheel mechanism (3) of any one of the preceding claims, wherein a periphery of the lower gasket (40) comprises lubricant.

15. The wheel mechanism (3) of any one of claims 6 to 14, wherein a restraining pin (42) is inserted into the fixing base (30) and the fixing tube (36) from a side of the fixing base (3) and abuts against a restraining recess (322) of the rotating shaft (322) such that the rotating shaft (320) is rotatably restrained in the through hole (360) of the fixing tube (36).
